(19) Europäisches Patentamt
European Patent Office
Office européen des brevets

(11) **EP 2 434 093 A2**

(12) **EUROPÄISCHE PATENTANMELDUNG**

(43) Veröffentlichungstag:
**28.03.2012 Patentblatt 2012/13**

(51) Int Cl.:
*F01D 5/14* (2006.01)   *F01D 5/18* (2006.01)

(21) Anmeldenummer: **11007790.6**

(22) Anmeldetag: **23.09.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **23.09.2010 DE 102010046331**

(71) Anmelder: **Rolls-Royce Deutschland Ltd & Co KG 15827 Blankenfelde-Mahlow (DE)**

(72) Erfinder:
• **Janke, Erik, Dr.**
  **12307 Berlin (DE)**
• **Täge, Jens**
  **12559 Berlin (DE)**

• **Schiessl, Thomas**
  **15711 Königs Wusterhausen (DE)**
• **Meier, Sebastian**
  **95454 Gesees (DE)**
• **Schiffer, Heinz-Peter, Prof. Dr.-Ing.**
  **64293 Darmstadt (DE)**
• **Winter, Nils**
  **63263 Neu-Isenburg (DE)**
• **Lehmann, Knut, Dr.**
  **12277 Berlin (DE)**

(74) Vertreter: **Weber, Joachim**
  **Hoefer & Partner**
  **Patentanwälte**
  **Pilgersheimer Strasse 20**
  **81543 München (DE)**

(54) **Gekühlte Turbinenschaufeln für ein Gasturbinentriebwerk**

(57)     Die Erfindung bezieht sich auf eine gekühlte Turbinenschaufel für ein Gasturbinentriebwerk, die mindestens einen sich innerhalb des Schaufelblattes radial, bezogen auf eine Drehachse des Gasturbinentriebwerks, erstreckenden Kühlkanal (14) mit in diesen mündenden Luftzuführungskanälen (12) aufweist, dadurch gekennzeichnet, dass zur Erzeugung eines wandnahen, mit hoher Umfangsgeschwindigkeit und radial schraubenlinienförmig bewegten Kühlluftstroms sich der Kühlkanal (14) bis in den Schaufelfuß (6) erstreckt und im Bereich des Schaufelfußes (6) zumindest ein düsenförmig ausgebildeter Luftzuführungskanal (12) tangential oder mit einer tangentialen Geschwindigkeitskomponente in den Kühlkanal (14) mündet.

Schnitt 0-0

Fig. 5

EP 2 434 093 A2

**Beschreibung**

Die Erfindung betrifft gekühlte Turbinenschaufeln für ein Gasturbinentriebwerk, die mindestens einen sich innerhalb des Schaufelblattes radial, bezogen auf eine Drehachse des Gasturbinentriebwerks, erstreckenden Kühlkanal mit in diesen mündenden Luftzuführungskanälen aufweist.

Eine aus der DE 100 53 356 A1 bekannte Turbinenschaufel weist zur effizienten Innenkühlung einen innen liegenden Vorderkantenkühlkanal mit rundem Kanalquerschnitt und über die Länge des Kühlkanals übereinander angeordneten Kühlluftzuführungsbohrungen auf, die von einem in der Schaufel ausgebildeten Kühlmittelkanal im Wesentlichen tangential in den Vorderkantenkühlkanal münden und in diesem Kühlluftwirbel zur Erzielung einer hohen Kühlwirkung erzeugen.

In der US 2006/0280607 A1 wird eine Turbinenschaufel mit einer sich in Längsrichtung der Schaufel konisch verjüngenden Kühlkammer beschrieben. Aus einem dem Vorderkantenkühlkanal innerhalb der Schaufel benachbarten Kühlmittelkanal wird aus einer Vielzahl von über dessen gesamte Höhe ausgebildeten Injektionskanälen Kühlluft tangential in den Kühlkanal eingeleitet, dessen konische Form die Ausbildung von spiralförmigen Kühlluftwirbeln zur Aufnahme von Wärme bewirkt.

Aus der US 2006/0056967 A1 ist eine Turbinenschaufel mit einer Mehrzahl sich radial erstreckender Kühlkanäle bekannt, bei der das Kühlmedium durch eine oder mehrere Dosierbohrungen, die in einer den Vorderkantenkühlkanal von dem Schaufelfuß trennenden Wand angeordnet sind, tangential in den Vorderkantenkühlkanals geleitet und in diesem verwirbelt wird. An den Innenflächen des Vorderkantenkühlkanals sind Leitstreifen ausgebildet, um die Turbulenzen in dem Kühlmedium zu erhöhen.

Der Erfindung liegt die Aufgabe zugrunde, mit einer Innenkühlung versehene Rotor-und/oder Statorschaufeln für Gasturbinentriebwerke so auszubilden, dass eine verbesserte Kühlwirkung erzielt wird.

Erfindungsgemäß wird die Aufgabe mit einer gemäß den Merkmalen des Patentanspruchs 1 ausgebildeten Turbinenschaufel gelöst.

Vorteilhafte Weiterbildungen der Erfindung sind Gegenstand der Unteransprüche.

Der Grundgedanke der Erfindung besteht darin, dass die Kühlluft mit hoher Geschwindigkeit tangential in einen in Längsrichtung (z.B. Radialrichtung, bezogen auf die Drehachse des Gasturbinentriebwerks) des Schaufelblattes verlaufenden Kühlkanal, insbesondere den Vorderkantenkühlkanal eingeblasen wird, um sich wirbelartig oder zyklonartig mit hoher Umfangsgeschwindigkeit $V_{tan}$ an der Kühlkanalwand schraubenlinienförmig in axialer Richtung entlang des Kanals zu bewegen. Infolge der hohen lokalen Geschwindigkeit nahe der Wand und des auf den wandnahen Bereich konzentrieren Kühlluftstroms erhöht sich die Reynoldszahl und verringert sich die Grenzschichtdicke, so dass die innere Wärmeübertragung und die Kühlwirkung des in die Schaufeln eingebrachten Kühlmediums deutlich verbessert wird. Aufgrund des dadurch bedingten verringerten Kühlluftbedarfs erhöht sich der Wirkungsgrad der Turbine. Andererseits kann die Lebensdauer der Schaufeln durch eine verbesserte Kühlwirkung erhöht werden.

Die gezielte Erzeugung einer Wirbelströmung mit einer bestimmten Mindeststärke (Drallzahl) im Kühlluftkanal hat mehrere Effekte, die die gewünschte erhöhte Wärmeübertragung zwischen Fluid und Wand ermöglichen:

1. Zusätzlich zur axialen Durchströmung des Kühlluftkanals besitzt die Kühlluftströmung eine tangentiale Komponente. Somit erhöht sich die Reynoldszahl und verringert sich die Grenzschichtdicke, so dass die innere Wärmeübertragung deutlich verbessert wird.

2. Die am unteren Ende des Kühlluftkanals eingebrachte Drallströmung unterliegt einem zur Kühlluftkanalachse radialen Druckgleichgewicht (Gleichung (1)), das auf der

$$\frac{\partial p}{\partial r} = \frac{\rho v_{\tan}^{2}}{r} \qquad (1)$$

Kanalachsen einen geringen und im wandnahen Bereich einen hohen Druck hervorruft. Durch die Dissipation des Dralles (Abschwächung von $V_{tan}$) mit der axialen Länge des Kühlluftkanals nimmt nach Gleichung (1) das Druckgefälle zwischen Kanalmitte und Kanalwand ab. Dies führt im zentralen (achsnahen) Bereich des Kühlluftkanals zu einer axialen Rückströmung, welche wiederum eine verstärkte axiale Vorströmung nahe der Kanalwand zur Folge hat. Dieser Effekt erzeugt die gewünschten hohen Axial- und Tangentialgeschwindigkeiten nahe der Kanalwand (wie oben unter Punkt 1 beschrieben), die hohe Wärmeübergänge zur Folge haben.

3. Ein weiterer Effekt der Wirbelströmung mit einer bestimmten Mindeststärke ist die Ausnutzung von Grenzschichtinstabilitäten an konkaven Wänden. Die entstehenden Wirbelstrukturen besitzen ein hohes Maß an Turbulenz und tragen somit entscheidend zu einer Erhöhung des Wärmeüberganges bei. Die Entstehung der Wirbelstrukturen beruht auf dem Geschwindigkeitsgradienten $dV_{tan}/dr$. Die Fliehkräfte auf einer wandfernen Stromlinie sind größer als die Fliehkräfte einer wandnahen Stromlinie. Daher "drücken" innere Fluidschichten auf wandnahe Schichten. Da sich die inneren Schichten nicht als gesamte Schichten nach außen bewegen können, führen kleine Instabilitäten zum Zerfall der Schichten und zur Wirbelbildung. Diese Wirbel tauschen in radialer Richtung (Kanalmitte zur Wand und umgekehrt) Fluid aus und erhöhen damit stark den Wärmeübergang.

Da die Erzeugung der Turbulenz auf instationären Grenzschichteffekten beruht, kann auf die Herstellung interner Turbulatoren (Rippen) verzichtet werden.

Die Stärke der Wirbelströmung (Zyklonströmung) ist durch die Drallzahl gegeben. Diese stellt das Verhältnis von Drehimpuls zu Axialimpuls im Kanal dar, Gleichung (2). Die oben genannten Effekte sind stark von der Drallzahl abhängig. Eine Mindestdrallzahl von $S>=2$ am Eintritt des Kanales ist nötig, um die Effekte für die Schaufelkühlung

$$S = \frac{\int_0^R v_{ax} v_{\tan} r^2 \, dr}{R \int_0^R \overline{v_{ax}}^2 r \, dr} \qquad (2)$$

wirkungsvoll zu nutzen.

Daraus ergibt sich ein Flächenverhältnis der Querschnittsflächen des Zuführungskanals zur Querschnittsfläche des Kühlluftkanals von mindestens 1 : 2. Für eine optimale Ausnutzung der beschriebenen Effekte sollte die Drallzahl S (im Querschnitt der Erzeugung) im Bereich von 3-6 liegen.

Die erfindungsgemäße Lösung sieht somit vor, dass die Einspeisung der Kühlluft durch (den).zumindest einen Luftzuführungskanal im Bereich des Schaufelfußes erfolgt. Dies ergibt den wesentlichen Vorteil, dass für die Ausgestaltung des zumindest einen Luftzuführungskanals ausreichend Raum zur Verfügung steht, so dass dieser optimal angeordnet und dimensioniert werden kann, ohne dass die Strömungsführung beeinträchtigt wird und/oder dass die Bauteilfestigkeit der Schaufel beeinflusst würde.

Die Zuführung der Kühlluft aus einem oder mehreren Luftzuführkanälen erfolgt dabei entweder tangential oder zumindest mit einer Geschwindigkeitskomponente, die tangential zum Querschnitt des Kühlkanals angeordnet ist. Der Kühlkanal selbst kann dabei erfindungsgemäß kreisförmig oder im Wesentlichen kreisförmig ausgestaltet sein. Auch ist es möglich, im Einströmbereich (Mündungsbereich) des Luftzuführungskanals den Querschnitt des Kühlkanals in geeigneter Weise anzupassen, um die Ausbildung einer Wirbelströmung in dem Kühlkanal zu optimieren.

Bei der Verwendung zweier oder mehrerer Luftzuführkanäle können diese an bestimmten Positionen am Kühlluftkanalumfang und tangential zu diesem ausgebildet werden.

In besonders günstiger Ausgestaltung der Erfindung ist vorgesehen, dass die Zuführung der Kühlluft durch die Luftzuführkanäle eine zur Kanalachse axiale Komponente am Eintritt in den Kühlkanal (Zyklonkanal) haben kann.

Die Speisung des zumindest einen Luftzuführungskanals mit Kühlluft erfolgt erfindungsgemäß bevorzugterweise entweder durch einen Hohlraum am Schaufelfuß, welcher bevorzugt unterhalb der inneren Plattform der Turbinenschaufel ausgebildet ist. Es kann sich dabei um einen saugseitigen oder druckseitigen Hohlraum handeln. Als Alternative hierzu kann die Kühlluftzuführung zu dem zumindest einen Luftzuführungskanal von der Unterseite des Schaufelfußes und durch diesen hindurch erfolgen. Auch hierbei erfolgt eine Einleitung der Kühlluft mit einer tangentialen Komponente in den Kühlkanal.

Erfindungsgemäß ist es möglich, die Zuführung der Kühlluft durch den zumindest einen Luftzuführungskanal so auszubilden, dass sich eine Drehrichtung in Uhrzeigerrichtung oder gegen die Uhrzeigerrichtung ergibt.

Weiterhin ist es erfindungsgemäß möglich, zusätzlich in dem Kühlkanal axial zur Kanalachse angestellte Kühlungsrippen anzuordnen, die zur Verstärkung der Zyklonströmung (Wirbelbildung, Wirbelströmung) dient. Zusätzlich ist es erfindungsgemäß auch möglich, eine konventionelle Rippenkühlung vorzusehen. Beide diese Maßnahmen können dazu dienen, bei der sich über die Länge des Kühlkanals ergebenden Abschwächung des Wirbels/Zyklons dessen Aufrechterhaltung zu unterstützen und/oder die Kühlwirkung zu erhöhen. Durch turbulente Rippenströmungen ergibt sich ein erhöhter Wärmeübergang, welcher eine Abschwächung des Dralls/Zyklons kompensiert.

Das erfindungsgemäße Kühlkonzept wird vorzugsweise beim Vorderkantenkühlkanal einer rotierenden Turbinenschaufel angewendet, kann aber auch bei anderen in Schaufellängsrichtung verlaufenden Kühlkanälen und auch zur Kühlung der stationären Leitschaufeln der Turbine benutzt werden.

In weiterer Ausbildung der Erfindung weist der Kühlkanal zur Ausbildung des wandnah rotierenden, zyklonartigen Luftstroms zumindest im Mündungsbereich der düsenförmigen Luftzuführungskanäle einen im Wesentlichen kreisförmigen Querschnittbereich auf.

In vorteilhafter Weiterbildung der Erfindung können die Luftzuführungskanäle einen in radialer Richtung (bezogen auf die Drehachse des Gasturbinentriebwerks) oder axialer Richtung (bezogen auf den Kühlkanal) gekrümmten Verlauf aufweisen, so dass die Pumpwirkung der rotierenden Schaufeln verbessert wird und eine ausreichende Kühlluftzufuhr in die Kühlkanäle gewährleistet ist. Zur weiter verbesserten Ausbildung des zyklonartig rotierenden Luftstroms im Kühlkanal können die Luftzuführungskanäle zusätzlich einen in Umfangsrichtung des Luftstroms gekrümmten Verlauf haben.

In Ausgestaltung der Erfindung münden die beiden gegenüberliegenden Luftzuführungskanäle zur Ausprägung des schraubenlinienförmigen Kühllufttransports in einem zur Längsachse des Kühlkanals stumpfen Winkel in den Kühlkanal. Die Zuströmung kann somit mehr oder weniger starke axiale (bezogen auf die Längsachse des Kühlkanals) Komponenten enthalten.

Die beiden gegenüberliegenden Luftzuführungskanäle können an einer bestimmten Stelle oder auch an zwei oder mehreren Stellen in Längsrichtung des Kühlkanals vorgesehen sein. Vorzugsweise münden die Luftzuführungskanäle unmittelbar oberhalb des Bodens des Vorderkantenkühlkanals, und zwar ausgehend von einem saugseitigen und druckseitigen Hohlraum am Schaufelfuß unterhalb der inneren Plattform der Turbinenschaufel.

In weiterer Ausbildung der Erfindung erfolgt die Abführung der Kühlluft aus dem Kühlkanal teilweise über Filmkühlbohrungen, die die Ausbildung der zyklonartigen Kühlluftbewegung verbessert und/oder am Ende des Zyklonkanals und/oder über Luftaustrittsöffnungen an der Schaufelspitze und/oder durch Umleitung in einen benachbarten Kühlkanal verbessern kann. Insbesondere bei einer moderaten Filmkühlluftentnahme von ca. 10 bis 50 % kann der Wandwärmeübergang erhöht werden. Der Effekt beruht auf der Absaugung der wandnahen Grenzschichtströmung, so dass das Geschwindigkeitsmaximum der tangentialen und axialen Strömung nahe der Wand verbleibt.

Ein Ausführungsbeispiel der Erfindung wird anhand der Zeichnung näher erläutert. Es zeigen:

Fig. 1    eine Leitschaufel- und Turbinenschaufelanordnung eines Flugtriebwerks;

Fig.2    eine Teilansicht einer Turbinenschaufel mit zweiseitiger tangentialer Kühlluftzufuhr in den Vorderkantenkühlkanal;

Fig. 3    eine Schnittansicht im Bereich der tangentialen Kühlluftzufuhr in den Vorderkantenkanal;

Fig.4    eine schematische Darstellung nur des durch den zyklonförmigen wandnahen Strömungsverlauf gekennzeichneten Vorderkantenkühlkanals und der an diesen angeschlossenen, im Schaufelfuß ausgebildeten düsenförmigen Luftzuführungskanäle,

Fig. 5    eine teil-perspektivische Schnittansicht, ähnlich Fig. 2, eines Ausführungsbeispiels mit einem Luftzuführungskanal, und

Fig. 6    eine Schnittansicht längs der Linie A-A von Fig. 5.

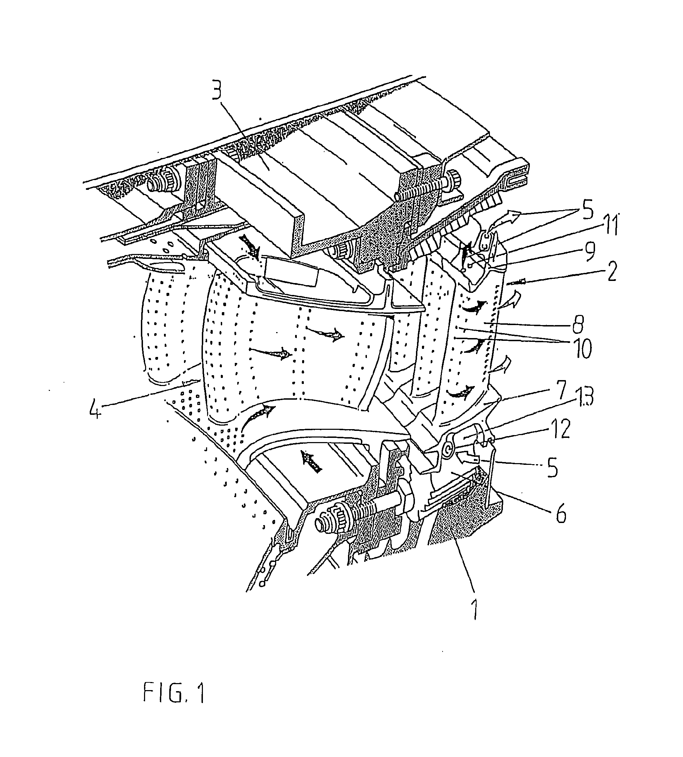

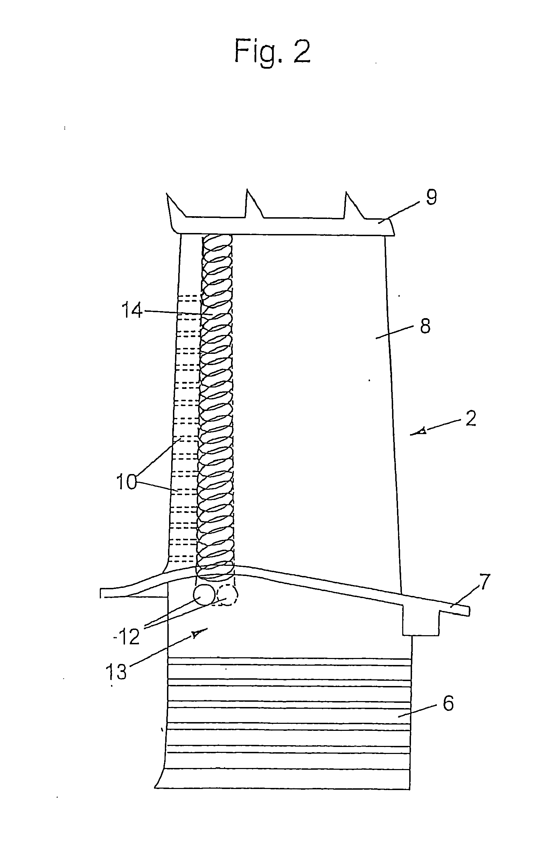

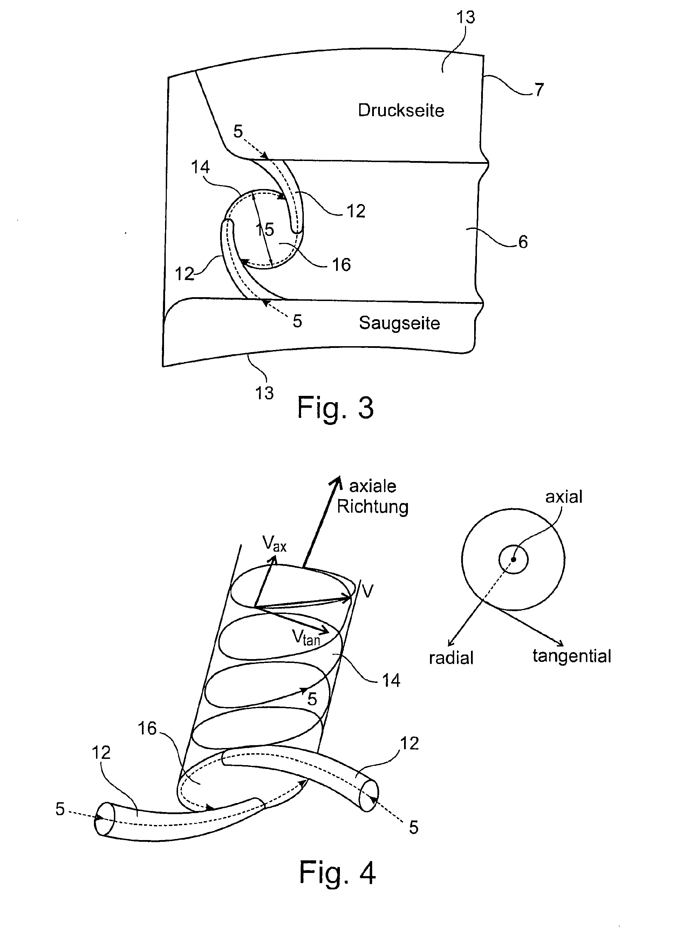

Wie Fig. 1 zeigt, umfasst die Turbine eines Gasturbinentriebwerks eine Mehrzahl von mit einer Rotorscheibe 1 verbundenen Turbinenschaufeln 2 und diesen stromauf zugeordneten, am Triebwerksgehäuse 3 angebrachten Leitschaufeln 4, die durch Außenkühlung (Filmkühlung) und Innenkühlung mit von einem Kompressor zugeführter, durch Pfeile 5 gekennzeichneter Kühlluft gekühlt werden. Die Turbinenschaufel 2 weist einen an der Rotorscheibe 1 gehaltenen Schaufelfuß 6, eine innere Plattform 7, ein Schaufelblatt 8 und eine äußere Plattform 9 auf. Das zur Innenkühlung als Hohlkörper ausgebildete Schaufelblatt 8 ist mit Kühlkanälen und Filmkühlbohrungen 10 sowie Luftaustrittsöffnungen 11 an der Schaufelspitze ausgebildet. Durch jeweils einen von den gegenüberliegenden Seiten des Schaufelfußes 6 ausgehenden Luftzuführungskanal 12 gelangt Kühlluft (Pfeil 5) aus dem unterhalb der Plattformen 9 zwischen zwei benachbarten Turbinenschaufeln 2 vorhandenen Hohlraum 13 von zwei gegenüberliegenden Seiten (saugseitig und druckseitig) in den unteren Abschnitt eines sich im Innern der Turbinenschaufel 2 vom Schaufelfuß 6 bis zur Schaufelspitze entlang der Schaufelvorderkante erstreckenden Vorderkantenkühlkanals 14 (Fig. 2 bis 4). Die dem Vorderkantenkühlkanal 14 zugeführte Kühlluft 5 strömt über zur die Außenkühlung des Schaufelblattes 8 vorgesehenen Filmkühlbohrungen 10 und die Luftaustrittsöffnungen 11 nach außen und/oder in weitere im Schaufelblatt 8 befindliche Kühlkanäle (nicht dargestellt).

Aus den Figuren 2 bis 4 ist ersichtlich, dass die in den Vorderkantenkühlkanal 14 mündenden Luftzuführungskanäle 12 zur Mündung hin düsenförmig verjüngt ausgebildet sind und einander gegenüberliegend, jedoch um den Durchmesser des Vorderkantenkühlkanals 14 zueinander versetzt tangential an den weitestgehend kreisförmig (Pfeil 15) ausgebildeten Kühllufteintriftsbereich am Boden 16 des Vorderkantenkühlkanals 14 angeschlossen sind. Aufgrund dieser Anordnung und Ausbildung der Luftzuführungskanäle 12 strömt die Kühlluft 5 mit hoher Umfangsgeschwindigkeit $V_{tan}$ nahe der Innenwand des Vorderkantenkühlkanals 14 und bewegt sich mit zusätzlich mit einer axialen Geschwindigkeit $V_{ax}$. schraubenlinienförmig, das heißt in Form Zyklons in Richtung der Schaufelspitze. Die hierbei auftretenden physikalischen Effekte wurden oben stehend erläutert.

Die beiden in Höhe des Bodens 16 tangential in den Vorderkantenkühlkanal 14 mündenden düsenförmigen Luftzuführungskanäle 12 können zur Unterstützung der zyklonartig rotierenden Luftbewegung einen gekrümmten Verlauf haben und darüber hinaus zur Steuerung der schraubenlinienförmigen axialen (bezogen auf die Mittelachse des Kühlkanals 14) Bewegung des Kühlluftzyklons auch in einem stumpfen Winkel zur Längsachse des Vorderkantenkühlkanals 14 ausgerichtet sein bzw. zur Unterstützung der Pumpwirkung der rotierenden Schaufeln und zur Gewährleistung der Zufuhr eines hohen Luftvolumens in die Vorderkantenkühlkanäle in radialer Richtung gekrümmt ausgebildet sein (die Zuströmung kann somit mehr oder weniger starke axiale Komponenten enthalten). Zur kontrollierten Ausbildung einer zyklonartig und wandnah zirkulierenden Luftbewegung trägt weiterhin eine im tangentialen Eintrittsbereich der Luft vorgesehene kreisförmige Querschnittsausbildung des Vorderkantenkanals 14 bei.

Aufgrund der mit der zuvor erwähnten Anordnung und Ausbildung der Luftzuführungskanäle 12 erzielten hohen lokalen wandnahen Kühlluftgeschwindigkeit $V_{tan}$ und der dadurch bedingten geringen Grenzschichtdicke an der Innenwand des Vorderkantenkanals 14 sowie der durch instationäre Grenzschichtinstabilitäten bedingten hohen Turbulenz der Kühlluft wandnah am Innenumfang des Kühlkanals kann die Wärmeübertragung erhöht und die Kühlwirkung der in das Schaufelblatt 8 eingebrachten Kühlluft 5 wesentlich verbessert werden. Somit können der Kühlluftbedarf und mithin der Brennstoffverbrauch des Triebwerks verringert werden. Andererseits können bei gleichbleibendem Kühlluftmassenstrom die Lebensdauer der Turbinenschaufeln oder die Turbineneintrittstemperatur und damit der spezifische Schub erhöht werden.

Die vorliegende Erfindung ist nicht auf das oben erläuterte Ausführungsbeispiel beschränkt. Das vorgeschlagene Kühlprinzip kann nicht nur, wie zuvor beschrieben, bei rotierenden Turbinenschaufeln 2, sondern auch bei den gemäß Fig. 1 stromauf der rotierenden Turbinenschaufeln 2 fest angeordneten stationären Leitschaufeln 4 angewendet werden. Die Kühlluftzufuhr in den Vorderkantenkanal kann auch von der Schaufelspitze her erfolgen.

Die Zuführung der Kühlluft erfolgt, wie in dem vorliegenden Ausführungsbeispiel beschrieben, am Boden des Vorderkantenkanals 14 der Turbinenschaufeln. Es ist aber auch denkbar, in axialem Abstand (bezogen auf die Mittelachse des Kühlkanals 14) vom Boden des Kühlkanals 14 in der gleichen Weise zusätzliche Kühlluft aus einem an den Vorderkantenkühlkanal 14 angrenzenden Kühlkanal entgegengesetzt tangential in den Vorderkantenkanal einzuleiten.

Gemäß Fig. 1 wird die in die Turbinenschaufel 2 eingebrachte Kühlluft über Filmkühlbohrungen 10 und Luftaustrittsöffnungen 11 an der Schaufelspitze ausgetragen. Jedoch kann die an der Innenwand des Vorderkantenkanals rotierende Kühlluft auch in einen oder mehrere benachbarte Kühlkanäle (nicht dargestellt) umgelenkt werden. Eine möglichst hohe Umfangsgeschwindigkeit der im Vorderkantenkanal rotierenden Kühlluft und eine möglichst dünne Grenzschichtausbildung mit entsprechend hoher Wärmeübertragungsrate wird bereits in einem glatten Vorderkantenkühlkanal ohne Filmkühlbohrungen 10 und ohne Filmkühlluftentnahme erreicht. Eine weitere Erhöhung des Wärmeübergangs wird bei moderater Filmkühlabnahme aus der Zyklonströmung erreicht. Bei einem mit Filmkühlbohrungen versehenen Kühlkanal wird die wandnahe Geschwindigkeit im Kanal aufrechterhalten und gegebenenfalls verbessert, und eine gegenüber den bekannten Kühlanordnungen höhere Wärmeübertragungsrate erzielt. Die Wirksamkeit der Filmkühlung wird durch das vorliegende Kühlkonzept nicht negativ beeinflusst. Darüber hinaus ist es auch denkbar, dass der Hauptkühlkanal einer Turbinenschaufel oder Leitschaufel der Turbine nach dem oben beschriebenen Kühlprinzip gekühlt wird.

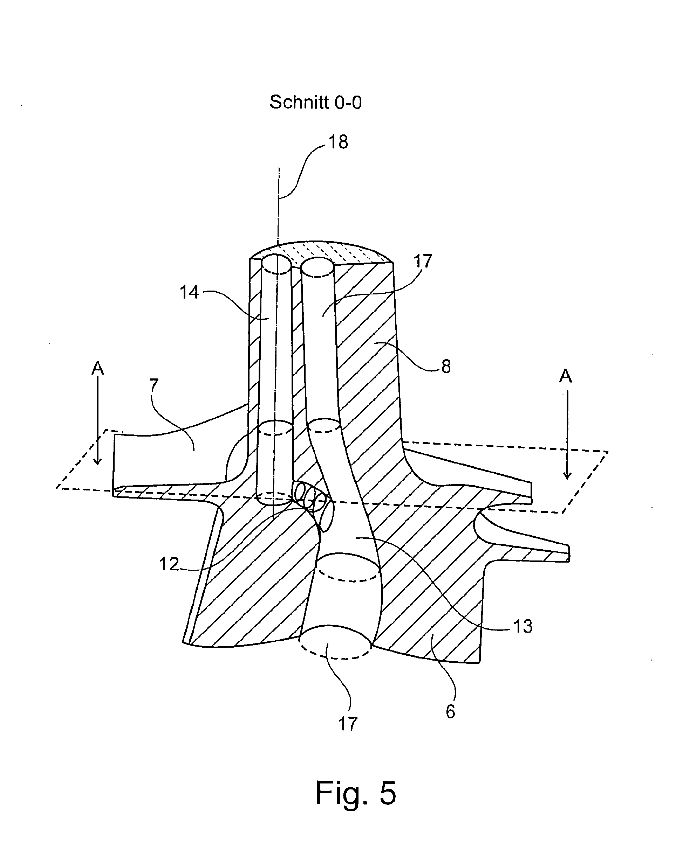

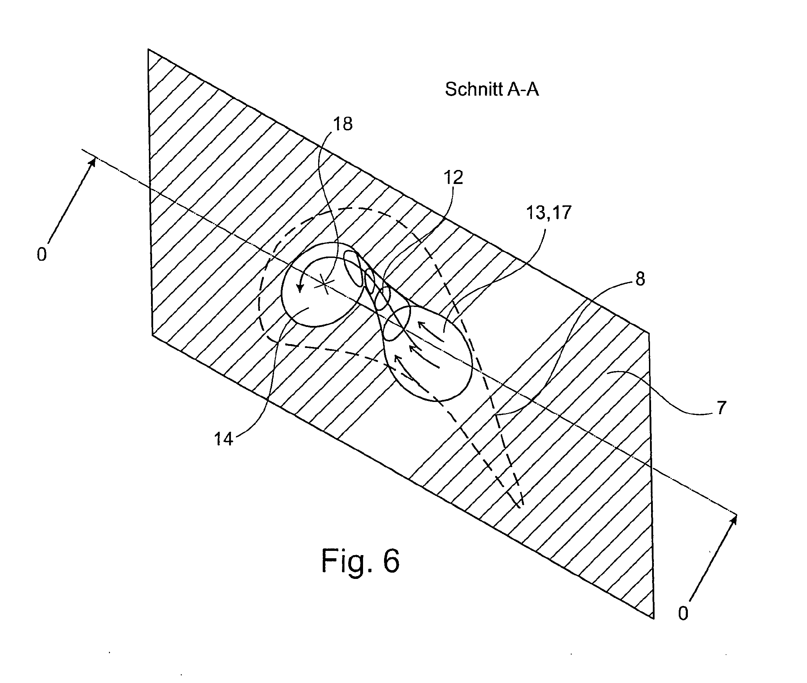

Die Fig. 5 und 6 zeigen in verdeutlichender Darstellung eine Ausgestaltungsvariante mit nur einem Luftzuführungskanal 12. Dieser zweigt (s. Fig. 5) von einem im Schaufelfuß 6 ausgebildeten Hohlraum 13 bzw. von einem Luftkanal 17 ab. Der Luftzuführungskanal ist, wie in Fig. 5 dargestellt, zur Radialrichtung (Mittelachse 18) des Kühlkanals 14 geneigt. Diese Neigung ist zusätzlich zu der Tangentialanordnung (s. Fig. 6) vorgesehen, um einen Drall (Zyklon) zu erzeugen.

Die Fig. 5 zeigt weiterhin eine Ausgestaltungsvariante, bei welcher parallel zu dem Kühlkanal 14 ein Luftkanal 17 vorgesehen ist, welcher sich ebenfalls in radialer Richtung erstreckt, um weitere Kühlluft in geeignete Bereiche der Schaufel 2, 8 zu transportieren.

**Bezugszeichenliste**

1    Rotorscheibe

2    Turbinenschaufel / Schaufelblatt

3    Triebwerksgehäuse

4    Leitschaufeln

5    Kühlluft, rotierende Kühlluftschicht (Pfeil)

6    Schaufelfuß

7    innere Plattform

8    Schaufelblatt

9    äußere Plattform

10    Filmkühlbohrung

11    Luftaustrittsöffnung

12    düsenförmiger Luftzuführungskanal

13    Hohlraum

14    Kühlkanal, Vorderkantenkühlkanal

15    kreisförmiger Kühllufteintrittsbereich

16    Boden von 14

17    Luftkanal

18    Mittelachse


**Patentansprüche**

1. Gekühlte Turbinenschaufel für ein Gasturbinentriebwerk, die mindestens einen sich innerhalb des Schaufelblattes radial, bezogen auf eine Drehachse des Gasturbinentriebwerks, erstreckenden Kühlkanal (14) mit in diesen mündenden Luftzuführungskanälen (12) aufweist, **dadurch gekennzeichnet, dass** zur Erzeugung eines wandnahen, mit hoher Umfangsgeschwindigkeit und radial schraubenlinienförmig bewegten Kühlluftstroms sich der Kühlkanal (14) bis in den Schaufelfuß (6) erstreckt und im Bereich des Schaufelfußes (6) zumindest ein düsenförmig ausgebildeter Luftzuführungskanal (12) tangential oder mit einer tangentialen Geschwindigkeitskomponente in den Kühlkanal (14) mündet.

2. Gekühlte Turbinenschaufel nach Anspruch 1, **dadurch gekennzeichnet, dass** der Luftzuführungskanal (12) zur Aufbringung einer sich in Längsrichtung des Kühlkanals (14) erstreckenden Strömungskomponente zur Radialrichtung geneigt angeordnet ist.

3. Gekühlte Turbinenschaufel nach Anspruch 1 oder 2, **dadurch gekennzeichnet, dass** der Luftzuführungskanal (12) mit einem am Schaufelfuß (6) ausgebildeten Hohlraum (13) verbunden ist oder mittels eines den Schaufelfuß (6) durchdringenden Luftkanals (17) mit Luft beaufschlagbar ist.

4. Gekühlte Turbinenschaufel nach einem der Ansprüche 1 bis 3, **dadurch gekennzeichnet, dass** zwei oder mehrere düsenförmig ausgebildete Luftzuführungskanäle (12) in entgegengesetzter Richtung sowie um den Kühlkanaldurchmesser zueinander versetzt tangential in den Kühlkanal (14) münden.

5. Gekühlte Turbinenschaufel nach einem der Ansprüche 1 bis 4, **dadurch gekennzeichnet, dass** der Kühlkanal (14) zumindest im Mündungsbereich der düsenförmigen Luftzuführungskanäle (12) einen im Wesentlichen kreisförmigen Querschnittbereich (15) aufweist.

6.  Gekühlte Turbinenschaufel nach einem der Ansprüche 1 bis 5, **dadurch gekennzeichnet, dass** die Luftzuführungskanäle (12) zur Erhöhung der Pumpwirkung bei der Rotation der Schaufeln einen in radialer Richtung gekrümmten Verlauf und zusätzlich einen in Umfangsrichtung des Luftstroms im Kühlkanal (14) gekrümmten Verlauf haben.

7.  Gekühlte Turbinenschaufel nach einem der Ansprüche 1 bis 6, **dadurch gekennzeichnet, dass** die Luftzuführungskanäle (12) zur Ausprägung des schraubenlinienförmigen Kühllufttransports in einem zur Längsachse des Kühlkanals (14) stumpfen Winkel in den Kühlkanal (14) münden.

8.  Gekühlte Turbinenschaufel nach einem der Ansprüche 1 bis 7, **dadurch gekennzeichnet, dass** die Luftzuführungskanäle (12) unmittelbar oberhalb des Bodens (16) des Kühlkanals (14) münden.

9.  Gekühlte Turbinenschaufel nach einem der Ansprüche 1 bis 8, **dadurch gekennzeichnet, dass** sich die Lufteintrittsöffnung der Luftzuführungskanäle (12) in einem saugseitigen und druckseitigen Hohlraum (13) am Schaufelfuß (6) befinden.

10. Gekühlte Turbinenschaufel nach einem der Ansprüche 1 bis 9, **dadurch gekennzeichnet, dass** die Abführung der Kühlluft aus dem Kühlkanal (14) über Filmkühlbohrungen (10) und/oder Luftaustrittsöffnungen (11) an der Schaufelspitze und/oder durch Umleitung in einen benachbarten Kühlkanal erfolgt.

11. Gekühlte Turbinenschaufel nach einem der Ansprüche 1 bis 10, **dadurch gekennzeichnet, dass** der Kühlkanal (14) der Vorderkantenkühlkanal (14) einer rotierenden Turbinenschaufel (2) oder einer stationären Leitschaufel (4) ist.

FIG. 1

# Fig. 2

Fig. 3

Fig. 4

Schnitt 0-0

Fig. 5

Schnitt A-A

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10053356 A1
- US 20060280607 A1
- US 20060056967 A1